# EUROPEAN PATENT APPLICATION

(11) **EP 4 821 343 A1**
(43) Date of publication of application: **14.10.2026**
(21) Application number: 26171444.8
(22) Date of filing: 09.04.2026
(51) Int. Cl.: A01D 89/00

(54) **WINDROW MERGER FOR COLLECTING AGRICULTURAL PRODUCTS FROM A FIELD**

(30) Priority: 11.04.2025 IT 202500008058
(71) Applicant: ROC s.r.l., 47824 Poggio Torriana (RN) (IT)
(72) Inventor: UBALDI, Raffaele, 47922 Rimini (RN) (IT); UBALDI, Stefano, 47922 Rimini (RN) (IT)
(74) Representative: Conti, Marco

(57) **Abstract**

Described is a windrow merger (1) for collecting agricultural products from a field in an advancing direction (AD) comprising a frame (2), a right pickup unit (3, 3A) and a left pickup unit (3, 3B), each includes a pickup device (31), configured to collect the agricultural products from the field, and a conveyor (32), configured to move the agricultural products along a conveying direction (D) oriented horizontally and transversely to the advancing direction (AD), a right connecting device (4, 4A) and a left connecting device (4, 4B), for movably coupling to the frame (2) the right (3A) and left (3B) pickup units, respectively, each of the right (4A) and left (4B) connecting devices includes a kinematic mechanism (5), for interconnecting the pickup unit (3) to the frame (2), and a main actuator (6), connected to the kinematic mechanism (5) to move the pickup unit (3) parallel to the conveying direction (D) between an inward position and an outward position, the kinematic mechanism (5) includes a pendulum (51), pivotally connected to the frame (2) to oscillate about a first axis (A) laying on a vertical plane parallel to the advancing direction (AD), and a main arm (52), having a first end (52A) hinged to the pendulum (51) and a second end (52B) coupled to the pickup unit (3).

## Description

The present invention relates to a windrow merger for collecting agricultural products from a field and a method for forming windrows by means of a windrow merger. A windrow merger is an agricultural machine that collects agricultural products, usually after they have been cut, in order to form one or more windrows, that is, a set of rows. The arrangement in windrows is functional for the drying of agricultural products and their collection, for example for forming bales. The common windrow mergers can be self-propelled, provided with an engine, or they can be a trailer and towed by a tractor. The windrow mergers are provided with a frame that supports at least one pickup unit, comprising a pickup device to for collecting the agricultural products from the field, and a device for moving the collected products. The movement device is usually placed in the vicinity of the pickup device and moves the products along a direction transversal to the advancing direction of the vehicle, so as to form the windrows in the same advancing direction.

The problem of moving the pickup units is common among the solutions for collecting agricultural products to form windrows. In fact, there is a need to form variable windrows both in terms of number, that is, the number of windrows at each passage of the vehicle, and in terms of distance between the windrows. In particular, the windrows can be movable relative to a horizontal direction, transversal to the advance of the tractor. This possibility of moving the pickup unit provides the following advantages:
- creating a different number of windrows, depending on the position of the pickup units and depending on the number of pickup units present in the agricultural machine.
- forming windrows at the sides of the passage of the vehicle or centrally, at a median axis of the tractor, and/or varying the distance between the windrows according to predetermined parameters.

In order to obtain these advantages, prior art solutions are known, described for example in patent documents US9615513B2 and EP3357324B1, which provide a windrow merger provided with two pickup units, movable by horizontal and transversal translation with respect to the advancing direction of the tractor. This translation is guaranteed by an appropriate connection system connecting the frame to the pickup units. In particular, the connection system provides that each pickup unit is connected to a kinematic mechanism with an operation similar to that of a pendulum. The pendulum, suitably actuated, rotates in a hinged manner on the frame and moves the pickup unit. However, this pendulum connection system has the drawback that, in addition to the desired horizontal translation movement, the pendulum also forces the pickup unit to move vertically, towards and away from the ground. The vertical movement would lead to unwanted contact between the pickup unit and the ground. For this reason, the movement of the pickup unit must be carried out with the frame or with the pickup unit itself raised from the ground. This decreases the functionality and the efficiency of the windrow merger, as it cannot operate in the field when the pickup devices are raised.

Further, there is the need to move the pickup units to a position suitable for the transport, when the agricultural machine is not operational but must, for example, move along public roads. The transport position must be so as to reduce the overall horizontal footprint of the agricultural machine. In order to solve this problem, solutions are known such as those of patent documents EP4367996A1 or US 10076071 B2, wherein the pickup unit can be lifted from the field and folded, so as to reduce the overall lateral footprint. However, in the folded position, the pickup units alter the position of the centre of gravity of the agricultural machine, relative to the operating conditions in the field, making it unstable and unsafe during the transport. Further examples of windrow mergers are described, for example, in the following patent documents: EP3058804A1, US8166739B2, US8091331B2, EP4442105A1, EP3884759B1, US2015/319928A1 and US2018/213723A1.

However, there is still a need to provide windrow mergers which make it possible to form windrows in a particularly flexible and, at the same time, simple manner.

The aim of the present invention is to make available a windrow merger for collecting agricultural products from a field that overcomes the drawbacks of the above-mentioned prior art.

In particular, an aim of the present invention to provide a windrow merger for collecting agricultural products from a field which is capable of forming windrows which are variable, in terms of number and distance, in a practical, flexible and efficient manner.

A further aim of the present invention is to provide a windrow merger for collecting agricultural products from a field which is capable of being mobile and having safe transport conditions.

Said aim is fully achieved by the windrow merger according to the present invention as characterised in the appended claims.

In particular, the present invention provides a windrow merger for collecting agricultural products from a field in an advancing direction. The windrow merger comprises a frame. The windrow merger comprises a right pickup unit. The windrow merger comprises a left pickup unit. Each pickup unit comprises a pickup device. The pickup device is configured for collecting the agricultural products. Each pickup unit comprises a conveyor. The conveyor is configured for moving the agricultural products in a conveying direction. The conveying direction is oriented horizontally. The conveying direction is oriented transversely to the advancing direction. The windrow merger comprises a right connecting device. The windrow merger comprises a left connecting device. These right and left connecting devices are configured to movably couple the right and left pickup units, respectively, to the frame. Each right and left connecting device comprises a kinematic mechanism. The kinematic mechanism is configured to interconnect the pickup unit to the frame. Each of the left and right connecting devices comprises a main actuator. The main actuator is connected to the kinematic mechanism to move the pickup unit, parallel to the conveying direction. The pickup unit is movable, parallel to the conveying direction, between an inward position and an outward position. The kinematic mechanism includes a pendulum. The pendulum includes a rod or a rod-like body; for example, the pendulum consists of a rod or a rod-like body.

The pendulum is pivotally connected to the frame to oscillate about a first axis. The first axis lies on a vertical plane. The vertical plane is parallel to the advancing direction. The kinematic mechanism includes a main arm. The main arm has a first end, hinged to the pendulum. The main arm has a second end, coupled to the pickup unit.

It should be noted that, in a configuration in which the pendulum is directly coupled to the pickup unit (for example, the configurations described in the prior art documents), the oscillatory movement of the pendulum implies a corresponding oscillatory movement of the pickup unit (being directly connected to the pendulum).

In contrast to what is known, however, this solution allows the kinematic mechanism to be provided with a further element, the main arm, which is interposed between the pendulum and the pickup unit. The fact that the pendulum and main arm are hinged to each other allows the vertical movement of the pickup unit to be independent (with respect to the transverse translation). In this way, when, during the oscillation, the free end (the lower end) of the pendulum moves both horizontally and vertically, the pickup unit can translate only horizontally. Thus, it is possible to reduce the downtime that would be unavoidable if the vertical movement of the pendulum were also transmitted to the pickup unit.

It should be noted that the pickup units and the connecting device include, in a substantially symmetrical manner, the same components. In the following, where possible, no distinction will always be made between the "right" and "left" unit (or connecting device). In any case, the elements introduced for a single unit or a single connecting device are also to be considered as such for further units or further connecting devices.

In one example, the main actuator is connected between the frame and the pendulum. This provides an actuation system which operates directly on the pendulum. At least a part of the kinematic mechanism acts as a four-bar linkage in which the pendulum is the element whose movement is controlled directly by the main actuator.

In one example, the pendulum has an upper end and a lower end. The upper end is hinged to the frame. The main arm is hinged to the lower end of the pendulum, to rotate about a second axis. The second axis is at parallel to the first axis.

This solution allows the main arm to be moved with a rotational movement. The rotation takes place, substantially, on a plane parallel to the plane of rotation of the pendulum, that is, on the plane swept by the pendulum. In fact, the first axis and the second axis are parallel to each other.

In one example, the kinematic mechanism includes a suspension device. The suspension device is connected to the frame and to the main arm. The suspension device is configured for applying a damping action to the relative rotation between the main arm and the pendulum. The damping action is fundamental to control the movement of the main arm (therefore of the pickup unit), with respect to the pendulum and with respect to the frame. In fact, during normal working conditions of the machine, the pickup unit is in contact with the field to pick up the agricultural products. The contact between the field and the pickup unit means that the pickup unit is affected by the imperfections, depressions or reliefs of the ground. Thus, the suspension device between the frame and the pickup unit must be able to guarantee and absorb the movements caused by the passage on the ground of the agricultural field. For this reason, the suspension element is necessary to absorb such movements and, substantially, limit the angle of rotation of the main arm with respect to the pendulum.

In one example, the suspension device is configured to rotate the main arm relative to the pendulum, so as to move the respective pickup unit between a lowered position, a headland position, and a raised position. In this example, the suspension device acts as an actuator. Thus, the suspension device may also be able to act on the main arm to rotate it relative to the pendulum. This solution allows the pickup unit to be raised or lowered relative to the ground according to the requirements.

In one example, the suspension device includes a cylinder-piston unit connected to an elastic accumulator. The cylinder-piston unit has the advantage of being a single compact component that can perform both the suspension function and the function for actuation of the main arm.

In one example, the second end of the main arm is hinged to the pickup unit. Said coupling makes the pickup unit rotatable (for example, around a coupling axis, substantially parallel to the advancing direction) to allow the pickup unit to adapt to terrain imperfections. It should be noted that this rotational movement is optional and is distinct from the rotation that the main arm undergoes relative to the pendulum (in fact, the main arm is hinged to the pendulum (specifically, at its lower end).

In one example, the kinematic mechanism includes a folding arm. The folding arm has a first end and a second end. The first end is hinged to the second end of the main arm, to rotate about a third axis. The third axis is transversal to the second axis. The second end is coupled to the pickup unit. The folding arm gives the pickup unit a further degree of freedom. The pickup unit can thus rotate about a further axis.

In one example, the connecting device includes a folding actuator. The folding actuator connects the main arm and the folding arm. The folding actuator is configured to move the folding arm about the third axis.

In one example, the connecting device is configured to move the pickup unit between an operating position and a transport position. In the operating position, the main arm is arranged in the lowered position. Alternatively, in the operating position the main arm is arranged in the headland position. The operating position is the position used when the windrow merger is at work in the field. In the lowered position, the pickup unit is in direct contact with the ground, and the pickup device works to collect the agricultural products. The headland position is used when the windrow merger has completed a windrow (that is, it has travelled the entire length of a part of the field) and must, for example, turn around to return. The headland position partially lifts the pickup unit, so that the windrow merger is free to rotate and, as soon as the windrow merger is in a position ready to begin with the next windrows, the main arm is moved from the headland position to the lowered position.

In the transport position, the main arm is arranged in the raised position, and the pendulum is configured to be fixed in an outward position. The outward position of the pendulum corresponds to that of the pickup unit. In the transport position, the pickup unit is positioned to have a reduced footprint, so that the windrow merger can, for example, travel along public roads. In this position, the pendulum is fixed in the outward position. This outward position of the pendulum is advantageous in combination with further movements of the pickup unit.

In one example, the main actuator is configured to move the pickup unit between a plurality of stable positions. Preferably, the stable positions are to be understood as positions adjacent to one another, that is, continuous with each other. In one example, the connecting device includes a positioning sensor. The positioning sensor is configured to detect the position of the pickup unit with respect to the frame. Alternatively, the positioning sensor is configured to detect the position of the pickup unit with respect to another predetermined fixed reference. This solution allows the position of the pickup unit to be known and monitored. In fact, the pickup unit moves among the plurality of stable positions. These positions are the positions dictated by the desired position and distance between the windrows. For this reason, a control via the positioning sensor also allows a control on the type of windrows that the windrow merger is forming.

In one example, the windrow merger includes a control unit. The control unit is configured to receive from the positioning sensor a position signal relative to the position of the pickup unit. Preferably, a position signal relative to the position of the right and left pickup units. The control unit is further configured to send an actuation signal to the main actuator of the right pickup unit and to the respective main actuator of the left pickup unit. In this way, the right and left pickup units can move independently. This solution has the advantage of allowing independent control of the windrows.

In one example, the positioning sensor is mounted on the main actuator or on the suspension device. Preferably, the positioning sensor is a linear positioning sensor. These solutions are particularly advantageous and the type and positioning of the sensor described make the use of the sensor itself more effective.

In one example, each connecting device includes a plurality of tie-rods. The plurality of tie-rods is configured for forming a kinematic chain. The kinematic chain connects the frame to the pickup unit. In particular, the plurality of tie-rods of a connecting device connects the frame to the respective pickup unit. The plurality of tie-rods are configured for controlling the oscillation of the pickup unit. This solution allows control over the rotation of the components of the kinematic mechanism. As described, these components are connected to each other via rotational joints. In the absence of a suitable system of tie-rods, the components would be free to rotate 360° about the relative joint. For example, the oscillations of the pickup unit in the absence of tie-rods would be uncontrolled and uncontrollable, and the pickup unit would lose its effectiveness. Thus, the kinematic chain made up by the plurality of tie-rods allows a complete control of the oscillations of the entire kinematic mechanism.

In one example, the kinematic mechanism includes a first hinge joint. A hinge joint is a coupling in which several elements combine to rotate freely and independently around a same axis. In one example, at the first hinge joint, the pendulum, the main arm, and a first tie-rod of the plurality of tie-rods are connected to each other to freely rotate around an axis. Preferably, about the second axis. In one example, the kinematic mechanism includes a second hinge joint. In this example, the main arm, the folding arm, and a second tie-rod of the plurality of tie-rods are connected so as to be able to freely rotate around the third axis. In one example, the third axis is perpendicular to the first axis. These joints make the mechanical couplings of the kinematic mechanism efficient. In this way, the spaces can be optimised by minimising the components and ensuring the desired movements.

In a preferred embodiment, the kinematic mechanism includes:
- the pendulum, the main arm, the first and second tie-rods, connected together to form the first hinge joint;
- the main arm, the folding arm, the second tie-rod and a third tie-rod, connected together to form the second hinge joint;
- the main actuator;
- the suspension device;

According to one aspect, the present invention provides a method for forming windrows using a windrow merger. The windrow merger comprises a frame. The windrow merger comprises a right and left pickup unit for collecting agricultural products from a field along an advancing direction. The windrow merger comprises a right and left connecting device, to movably couple the corresponding pickup units, respectively, to the frame. Each of the right and left connecting devices includes a kinematic mechanism, for interconnecting the pickup unit to the frame. Each of the right and left connecting devices includes a main actuator. The method comprises a step of moving at least one of the right and left pickup units, transversely to the advancing direction, between an inward position and an outward position. The movement step of the pickup unit is performed by means of the respective main actuator. The movement step of the pickup unit is carried out by means of the respective connecting device.

In one example, the kinematic mechanism includes a pendulum and a main arm. The pendulum interconnects the frame and the main arm. The main arm is connected to the pickup unit. In the movement step, the pickup unit moves transversely to the advancing direction, maintaining a substantially constant height with respect to the field. This solution prevents a vertical movement, thus avoiding unwanted contact with the ground.

In one example, the pickup unit may be arranged in a plurality of stable positions, between an inward position and an outward position. The method further comprises a step of controlling the position of the pickup unit, by means of a positioning sensor.

In one example, the method comprises one or more of the following steps:
- a lifting step, wherein the pickup units move by rotation from an operating position, wherein the pickup units are suitable for collecting agricultural products, to a transport position, wherein the pickup units are lifted from the field;
- a folding step, wherein the pickup units move by rotation from the transport position to a folded transport position, wherein he pickup units are oriented in a direction substantially parallel to the advancing direction.

These and other features of the invention will become more apparent from the following detailed description of a preferred, non-limiting example embodiment of it, with reference to the accompanying drawings, in which:

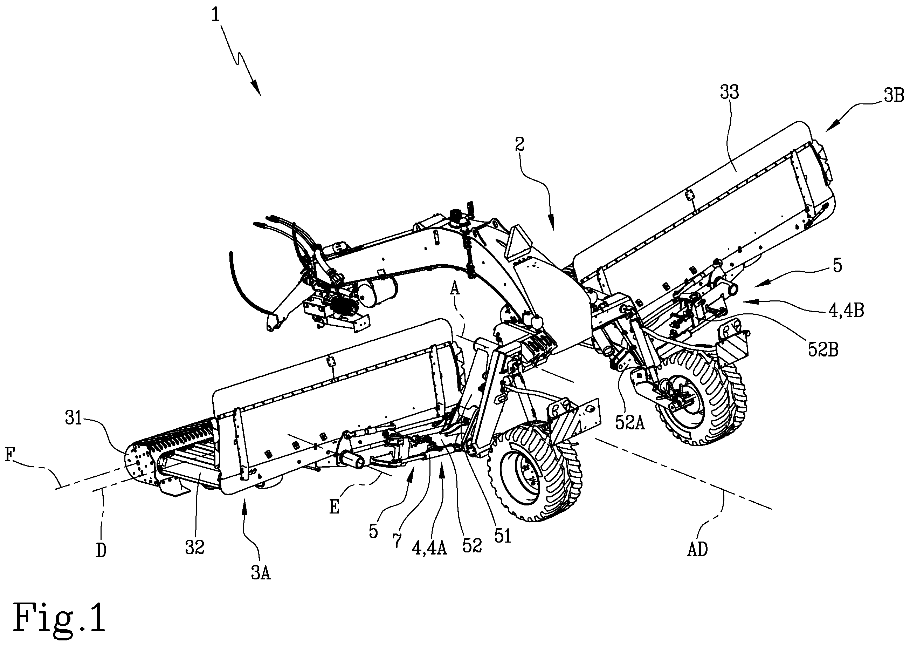

- Figure 1 illustrates an embodiment of the windrow merger according to the present invention;

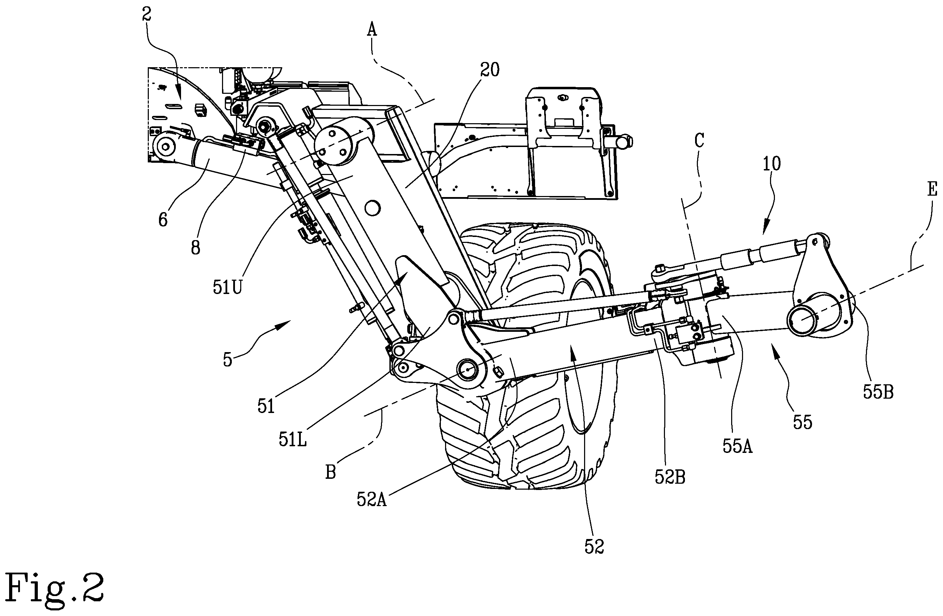

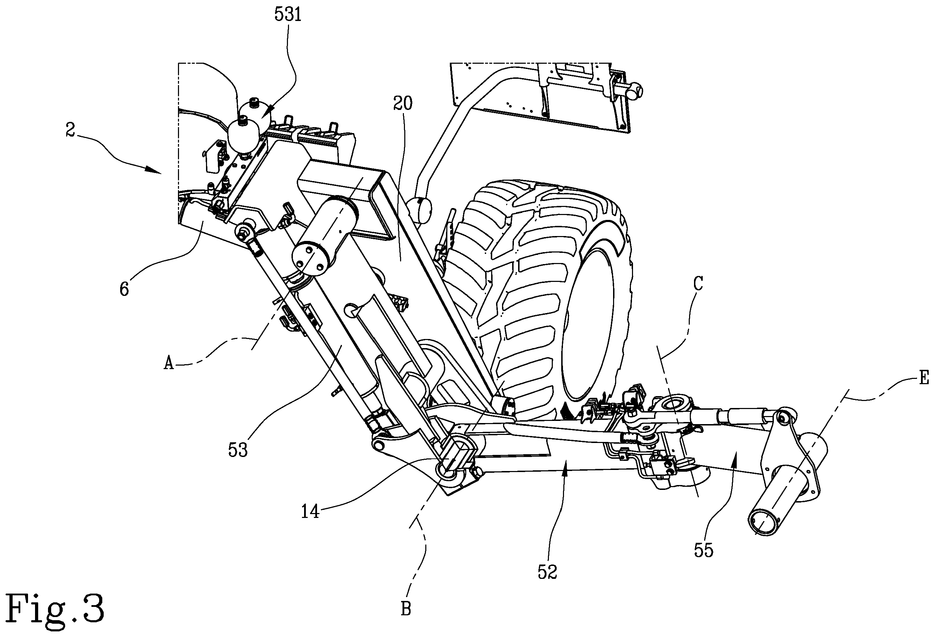

- Figures 2 and 3 illustrate the kinematic mechanism of the right connecting device of the windrow merger;
- Figures 4A and 4B illustrate the right and left connecting devices and a schematic side view of the pickup unit;
- Figure 5 illustrates a configuration of the windrow merger wherein the pickup unit is in the folded transport position;

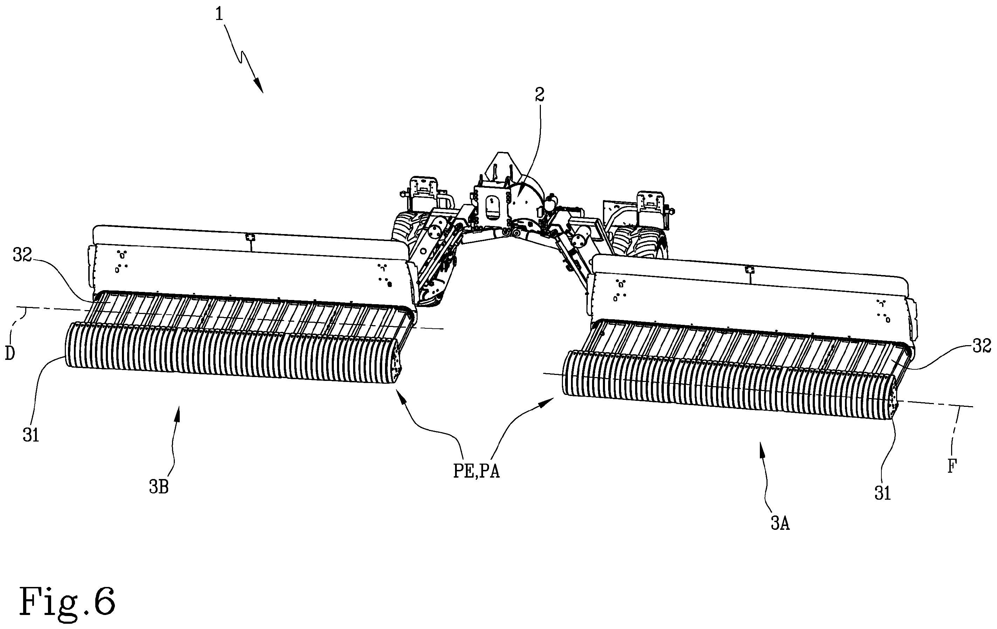

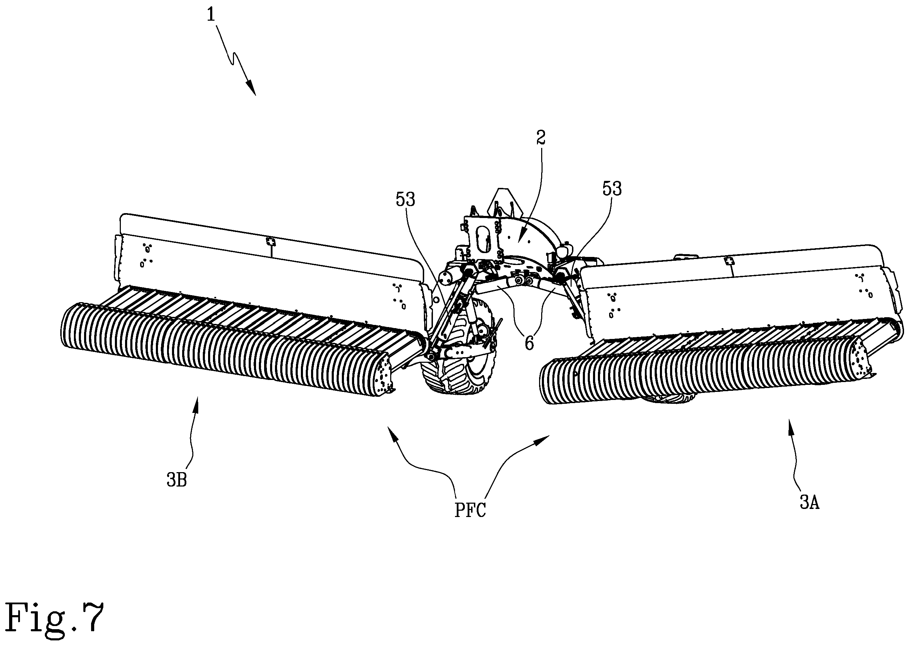

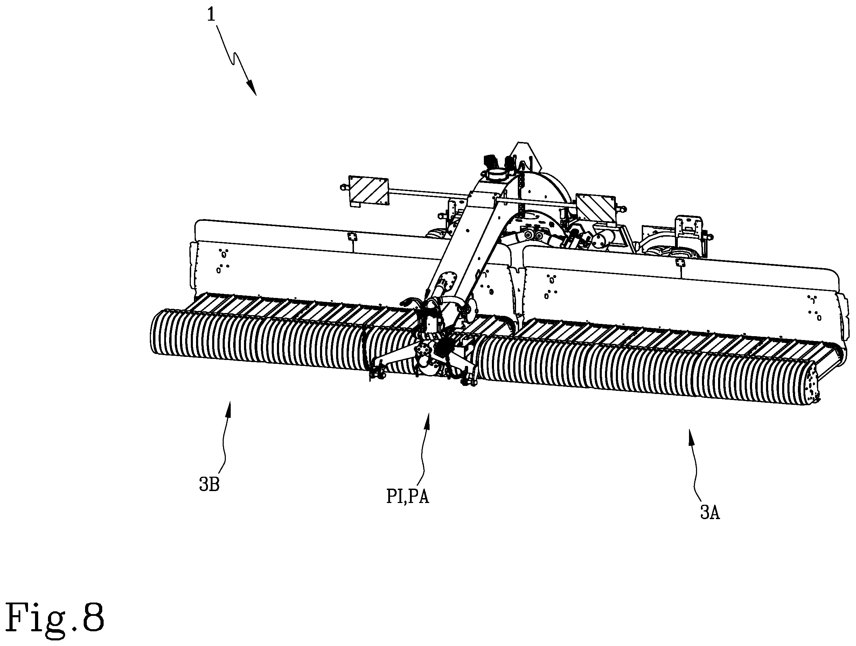

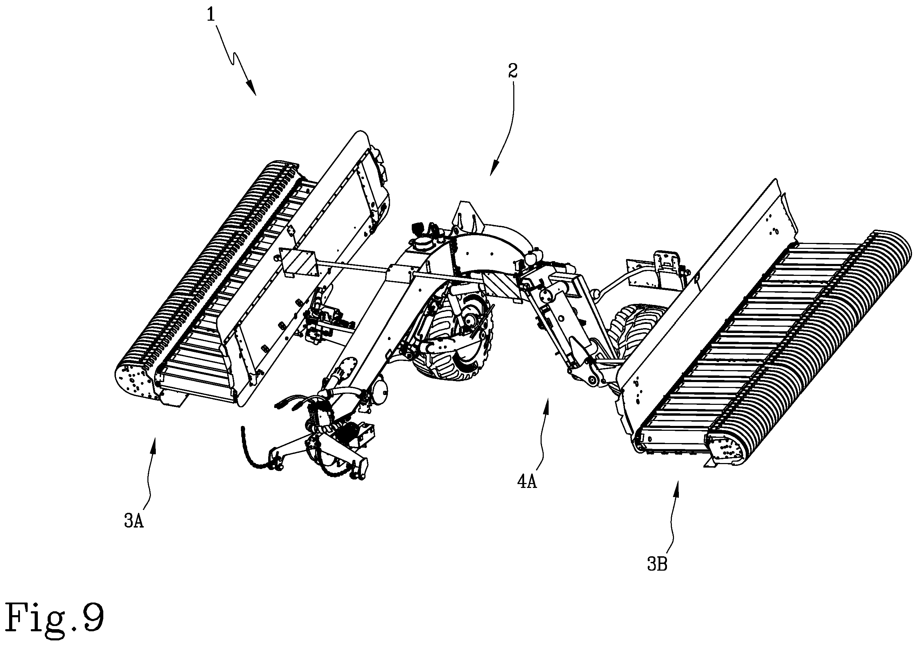

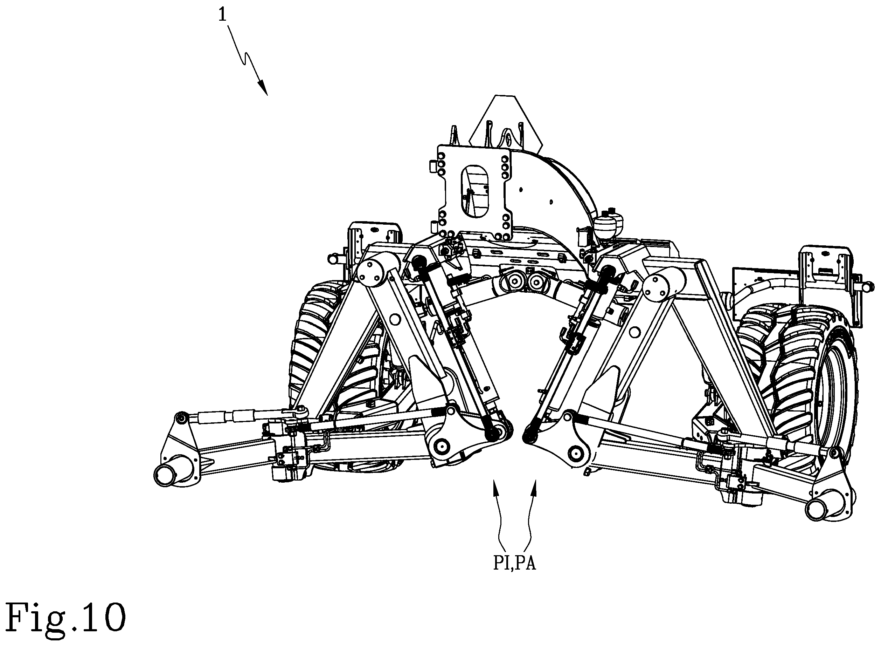

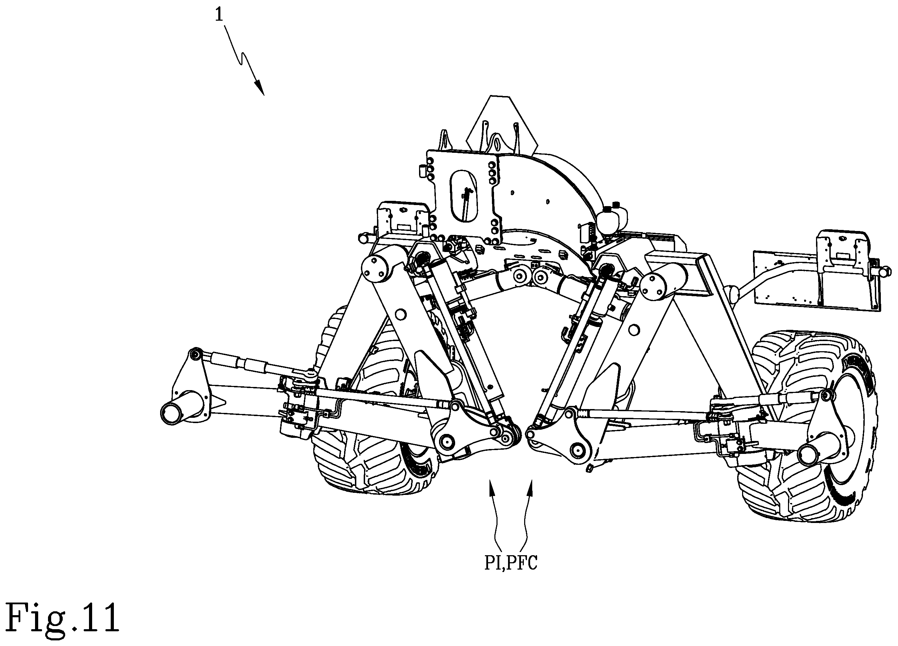

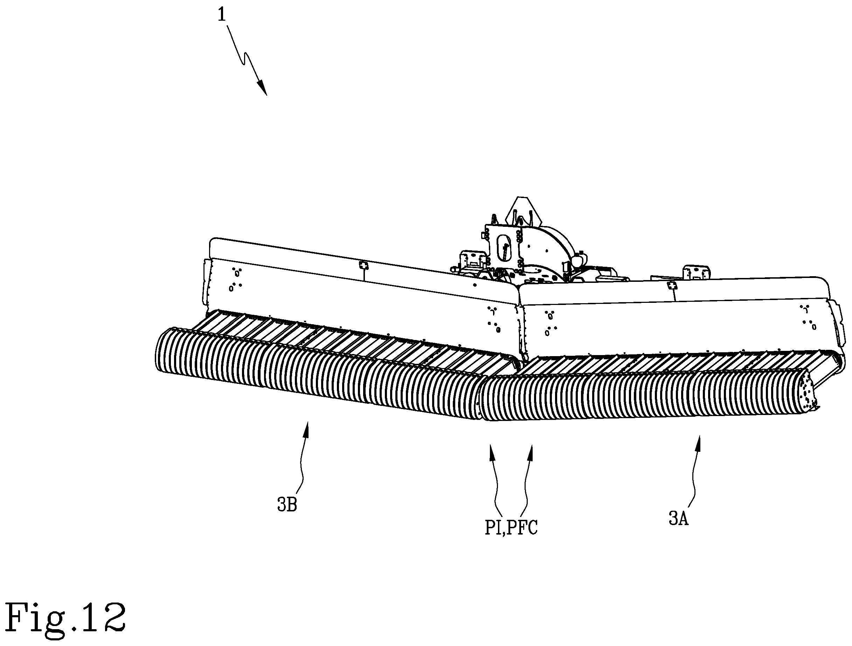

- Figures 6-12 illustrate possible positioning of the pickup units;

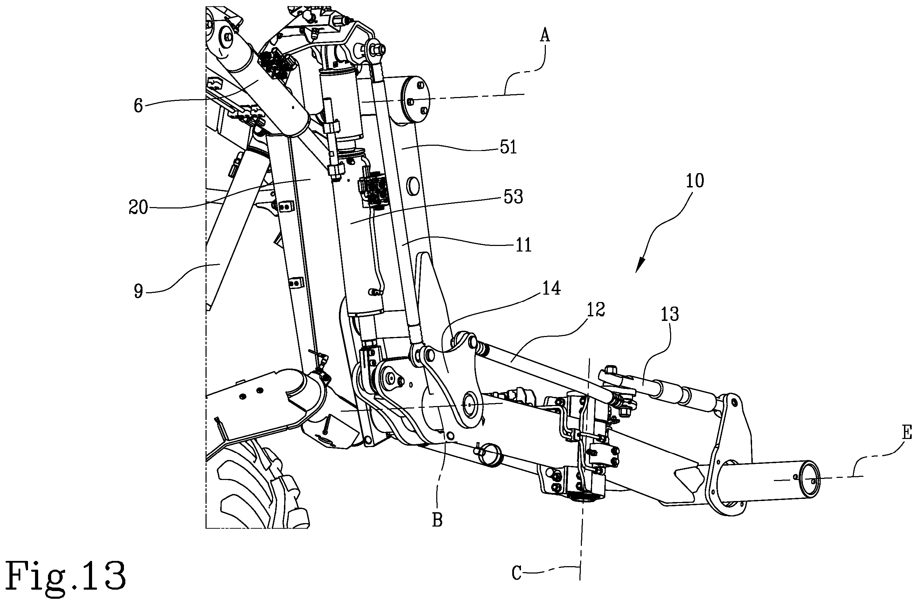

- Figure 13 illustrates a detail of the connecting device that highlights a plurality of tie-rods;

A windrow merger for collecting agricultural products from a field in an advancing direction AD is indicated by reference numeral 1. The windrow merger 1 comprises a frame 2. The windrow merger 1 comprises a right pickup unit 3, 3A and a left pickup unit 3, 3B. Each right pickup unit 3, 3A and each left pickup unit 3, 3B includes a pickup device 31, configured to collect the agricultural products from the field, and a conveyor 32, configured to move the agricultural products along a conveying direction D. Preferably, the pickup unit includes a side wall 33. The side wall 33 is connected to the conveyor 32 and is configured for operating in conjunction with the conveyor 32, to guide the products along the conveying direction D. In one example, a part of the pickup device 31 is configured to rotate about a pickup axis F. The conveying direction D is oriented horizontally and transversely to the advancing direction AD. The pickup axis F is parallel to the conveying direction D. The windrow merger 1 comprises a right connecting device 4A and a left connecting device 4B. The right connecting device 4, 4A and the left connecting device 4, 4B movably couple the right pickup unit 3A and the left pickup unit 3B, respectively, to the frame 2. Each of the right 4A and left 4B connecting devices includes a kinematic mechanism 5, each of which is configured to interconnect the pickup unit 3 to the frame 2. Each of the right 4A and left 4B connecting devices includes a main actuator 6, connected to the kinematic mechanism 5. The main actuator 6 is configured to move the pickup unit 3 parallel to the conveying direction D between an inward position PI and an outward position PE. In other words, the main actuator 6 moves the right 3A and left 3B pickup units away from and toward the frame 2 or with respect to a median plane of the windrow merger 1. It should be noted that, preferably, the pickup unit 3 moves between the inward position PI and the outward position PE maintaining a substantially constant height with respect to the field. That is to say, the opening movement (from the inward position PI to the outward position PE) and closing movement (from the outward position PE to the inward position PI) of the pickup units 3 do not involve a vertical movement of the pickup unit. In one example, the right 4A and left 4B connecting devices may include a single main actuator, that is, alternatively to two main actuators 6, one for each connecting device 4. The single main actuator may be configured to move the right pickup unit 3A and the left pickup unit 3B. This actuator can be configured to act on a kinematic mechanism. For example, the actuator may drive a cam, a rack and/or a further kinematic mechanism capable of transmitting translational motion in two opposite directions. The kinematic mechanism 5 includes a pendulum 51. The pendulum is pivotally connected to the frame 2 to oscillate about a first axis A; that is, the pendulum is connected to the frame by means of a rotational joint, for example a hinge, to rotate about the first axis A. The first axis A lies on a vertical plane parallel to the advancing direction AD. Preferably, the first axis A is inclined at an angle a upwards with respect to the ground. In one example, the angle a is in the range of 2°-8°. Preferably, the angle a is equal to 5°. The kinematic mechanism 5 includes a main arm 52. The main arm 52 has a first end 52A hinged to the pendulum 51 and a second end 52B coupled to the pickup unit 3. It should be noted that the main arm 52 is free to rotate with respect to the pendulum 51, independently of it. In one example, the main actuator 6 is connected between the frame 2 and the pendulum 51. In one example, the windrow merger 1 includes a lifting actuator 9. The lifting actuator 9 is configured to lift at least a portion of the frame 20 with respect to the ground; thus, the lifting actuator 9 is configured to lift the portion of the frame 20, together with the pickup units 3 and the respective connecting device 4.

In one example, the windrow merger 1 includes a side wall actuator, configured to move the side wall 33. In one example, the pendulum 51 has an upper end 51U, hinged to the frame 2, and a lower end 51L. The main arm 52 is hinged to the lower end 51L of the pendulum 51 so that it can rotate about a second axis B, parallel to the first axis A.

In one example, the kinematic mechanism 5 includes a suspension device 53. The suspension device 53 is connected to the frame 2 and to the main arm 52. The suspension device 53 is configured for applying a damping action to the relative rotation between the main arm 52 and the pendulum 51. Preferably, the suspension device 53 includes a cylinder-piston unit. The cylinder-piston unit is connected to an elastic accumulator 531. In one example, the suspension device 53 is configured to rotate the main arm 52 relative to the pendulum 51. In this way, the suspension device 53 can move the respective pickup unit 3 between a lowered position PA, a headland position PFC and a raised position PS. In one example, when it is necessary to raise the pickup unit 3 from the lowered position PA to the headland position PFC or to the raised position PS, the cylinder-piston unit pressurises the oil in a circuit of the suspension device 53 with high pressure. Conversely, if it is necessary to pass from the raised position PS to the headland position PFC or to the lowered position PC, the oil is released and the pressure of the oil is lowered.

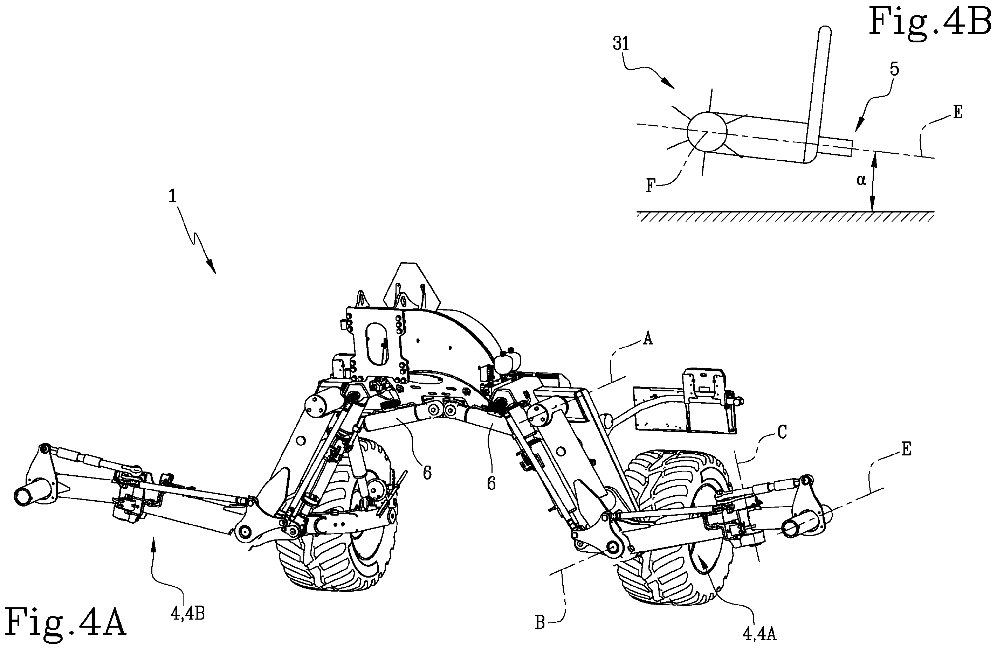

Thus, the cylinder-piston unit of the suspension device 53 performs both the function of a shock absorber and of an actuator. The damping is fundamental in order to allow the pickup unit 3 to follow the depressions and imperfections of the ground. The actuation which acts on the main arm 52 allows it to rotate about the second axis B. In one example, the kinematic mechanism 5 includes a folding arm 55, having a first end 55A, hinged to the second end 52B of the main arm 52. The first end 55A of the folding arm 55 is configured to rotate about a third axis C, transversal to the second axis B, and a second end 55B, coupled to the pickup unit 3. In one example, the second end 55B is movably coupled to the pickup unit 3. Preferably, the second end 55B is coupled to the pickup unit 3 so as to rotate about a coupling axis E. Preferably, the coupling axis E is perpendicular to the pickup axis F. The coupling axis E is parallel to the first axis A and to the second axis B. Preferably, the coupling axis E is inclined upward with respect to the ground by the angle a. It should be noted that it is necessary for the coupling axis E and the pickup axis F to be perpendicular to each other. In particular, the coupling axis E must be perpendicular to and intersecting the pickup axis F. For this reason, it is advantageous that the coupling axis E be inclined with respect to the ground. It should also be noted that, for a balancing requirement of the connecting device, the inclination of the coupling axis E consequently imposes the same orientation (the parallel direction and the same inclination) to the first axis A. Preferably, the second axis B is also inclined upwards with respect to the ground by the same angle a. For further information on the above description, by way of example only and in no way limiting, reference should be made to Figure 4. In one example, the connecting device 4 includes a folding actuator 7, interconnecting the main arm 52 and the folding arm 55. The folding actuator 7 is configured to move the folding arm 55 about the third axis C. In one example, one or more actuators among the main actuator 6, the suspension device 53, the side wall actuator, the lifting actuator 9 and the folding actuator 7 are double-acting actuators.

In one example, the connecting device 4 is configured to move the pickup unit 3 between an operating position and a transport position PT. It should be noted that the term 'operating position' can mean a plurality of positions of the pickup unit, wherein the windrow merger 1 is in a working condition, for example in the field. The lowered position PA, wherein the pickup unit works in contact with the field, and the headland position PFC, wherein the pickup unit is momentarily raised from the ground, are to be considered operating positions.

In the operating position, the main arm 52 is arranged in a lowered position or in a headland position. It should be noted that the lowered position and the headland position of the main arm 52 correspond to the lowered position PA and the headland position PFC, respectively, of the pickup unit 3, being connected to the main arm 52. Similarly, in the transport position PT, the main arm 52 is arranged in the raised position. Further, in the raised position, the pendulum 51 is configured to be fixed in an outward position corresponding to the outward position PE of the pickup unit 3. The outward position corresponding to the outward position PE of the pickup unit 3 means the position which the pendulum 51 adopts when the pickup unit 3 is in the outward position. Thus, in the operating position, the following conditions may occur:
- the pendulum 51 can be rotated about the first axis A so as to move the pickup unit between the inward position PI and the outward position PE;
- the main arm 52 and the pickup unit 3 can be arranged in the lowered position PA or in the headland position PFC, according to an operating condition which the windrow merger 1 must face (for example, actual collection of the products or reaching the headland position).

In the transport position, the following conditions may occur:
- the pendulum 51 is fixed so as to be kept in an outward position corresponding to the outward position PE of the pickup unit 3;
- the main arm 52, suitably actuated by the suspension device 53, can rotate about the second axis B until being positioned in the raised position PS. In one example, the main actuator 6 is configured to move the pickup unit 3 between a plurality of stable positions. A plurality of stable positions means a plurality of positions that are continuous with each other between the inward position PI and the outward position PE.

The movement of the pickup unit from an operating position to a transport position is a lifting step. The lifting step requires that the pickup unit is raised with respect to the position in which it is in contact with the ground. The lifting step occurs both when it is necessary to move from an operating position to a transport position, and when it is necessary to move from a lowered position PA to a headland position PFC.

In one example, the connecting device 4 includes a positioning sensor 8, configured to detect the position of the pickup unit 3 with respect to the frame 2. In other words, the positioning sensor 8 is configured to detect in which position, between the inward position PI and the outward position PE, the pickup unit is located. In one example, the windrow merger 1 includes a control unit. The control unit is configured to receive a position signal from the positioning sensor 8, relative to the positions of the right 3A and left 3B pickup units. Further, the control unit is configured to send an actuation signal to the main actuator 6 of the right pickup unit 3A and the main actuator 6 of the left pickup unit 3B, so that the right pickup unit 3A and the left pickup unit 3B can move independently. This possibility, guaranteed by the control unit, allows the windrow merger 1 to create asymmetrical windrows, depending on the specific needs of collecting agricultural products from the field.

In one example, the control unit is configured to actuate the main actuator 6 and to vary the speed of the main actuator 6, thus the speed of movement of the right pickup unit 3A and the left pickup unit 3B. Preferably, the control unit can vary the speed as a function of the detected position of the pickup unit. In one example, the control unit may send a speed command to the main actuator 6. For example, the speed command may include an increasing speed, for a first time interval, a constant speed, for a second time interval, and a decreasing speed for a third time interval. In this context, the positioning sensor 8 is fundamental. If the control unit did not know the position of pickup unit 3, it would command the main actuator 6 "blindly". For example, the speed command can be programmed so as to make the pickup unit 3 perform a movement from an inward position to an outward position, according to a predetermined speed profile. If, at a different time, the windrow merger 1 forms a different windrow (for example two windrows at different distances) and therefore the pickup unit 3 is in an intermediate position, between the inward position PI and the outward position PE, the application of the same speed command could compromise one or more components of the pickup device 4. In other words, providing a command or a predefined speed profile also determines the path of the pickup unit 3 in the predefined space. Thus, if the starting point of the pickup unit 3 differs from the one the control unit has stored, and for which it is applying that specific speed profile, unwanted headland events would be generated that can also lead to impact or breakage of the components of the connecting device 4. For this reason, it is particularly advantageous to have the positioning sensor 8 and for it to be able to exchange information with the control unit. Preferably, the control unit is capable of receiving the position signals from the sensor 8 and modifying the original speed command into a further speed command, according to one or more predetermined parameters. In one example, the positioning sensor 8 is mounted on the main actuator 6 or on the suspension device 53. In one example, the positioning sensor 8 is a linear positioning sensor.

In one example, each connecting device 4 includes a plurality of tie-rods 10, configured to form a kinematic chain for connecting the frame 2 to the respective pickup unit 3. The tie-rods 10 are configured to control the movement of the pickup unit 3. In particular, the tie-rods 10 are configured to control the oscillation of the pickup unit 3. The pickup unit 3 can rotate (oscillate) about the coupling axis E. The tie-rods 10 are configured to limit an angle of rotation of the pickup unit 3 about the coupling axis E. In one example, the kinematic mechanism 5 includes a first hinge joint. In one example, the first hinge joint is a rotation joint about the second axis B. In another example, the first hinge joint is a triple joint. In this example, the pendulum 51, the main arm 52 and at least a first tie-rod 11 of the plurality of tie-rods 10 are connected to freely rotate around the second axis B. Preferably, also a second tie-rod 12 is connected to the first hinge joint. In one example, the kinematic mechanism 5 includes a second hinge joint. In one example, the second hinge joint is a rotation joint about the third axis C. In one example, the second hinge joint is a triple joint. In this example, the main arm 52, the folding arm 55 and at least the second tie-rod 12 of the plurality of tie-rods 10 are connected to freely rotate around the third axis C. Preferably, also a third tie-rod 13 is connected to the first hinge joint. Preferably, the first tie-rod 11 and the second tie-rod 12 are connected to the first hinge joint by means of a bracket 14. The bracket 14 is configured to rotate about the second axis B and transmit the motion between the first tie-rod 11 and the second tie-rod 12. The bracket 14 is particularly advantageous for controlling an oscillating motion of the pickup unit about the coupling axis E.

In one example, the kinematic mechanism 5 includes:
- the first hinge joint, wherein the pendulum 51, the main arm 52, the first tie-rod 11 and the second tie-rod 12 are pivotally connected to each other by means of the bracket 14;
- the second hinge joint, wherein the main arm 52, the folding arm 55, the second tie-rod 12 and the third tie-rod 13 are pivotally connected to each other;
- the main actuator (6);
- the suspension device (53);

The movement of the folding arm 55 about the third axis C takes place during a folding step. In the folding step one or more pickup units 3 are moved by rotation from the transport position to a folded transport position. In this folded transport position the folding arm 55 is oriented transversely with respect to the main arm 52. For example, the folding arm 55 may form an angle of 90° with the main arm 52. In the folded transport position, the pickup units 3 are oriented in a direction substantially parallel to the advancing direction AD. For example, when moving from the operating position to the folded transport position, the windrow merger 1 carries out the following steps:
- opening the pendulum 51 from the inward position PI to the outward position PE, by means of the main actuator 6;
- moving the main arm 52, about the second axis B, from the bottom upwards, until it preferably reaches a position substantially perpendicular to the ground, by means of the cylinder-piston unit of the suspension device 53.
- rotating the folding arm 55 about the third axis C, by means of the folding actuator 7.

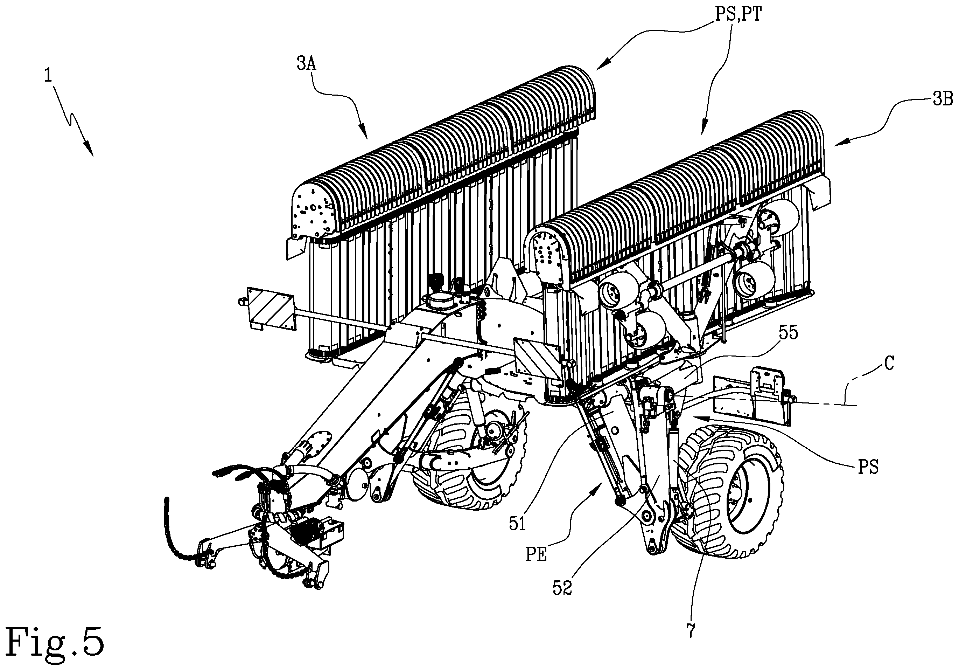

With particular reference to Figure 5, in the folded transport position the pickup units are arranged so that the pickup axis F is parallel to the advancing direction and, at the same time, the coupling axis E is perpendicular to the ground.

In one example, the windrow merger 1 first performs the folding of the folding arm 55, then the movement of the main arm 52 about the second axis B.

In one example, the windrow merger 1 comprises a hydraulic circuit. In one example, the control unit is connected to the hydraulic circuit by means of a hydraulic distributor. The hydraulic distributor is mounted on the frame 2. Preferably, the hydraulic distributor is mounted inside a cavity of the frame 2. The hydraulic distributor is configured to communicate with one or more of the following elements:
- the main actuator 6;
- the folding actuator 7;
- the suspension device 53;
- the lifting actuator 9;
- the side wall actuator.

The hydraulic circuit comprises a tank, a pump and a load-sensing system. In one example, the distributor comprises a plurality of solenoid valves. Preferably, the plurality of solenoid valves are proportional valves. The proportional valves are particularly advantageous when they actuate actuators provided with a position sensor, as they make the stroke of the actuators adaptable and modifiable as a function of other detected parameters. For example, the proportional valves are particularly effective in providing the speed command to the main actuator 6. Preferably, each solenoid valve has a bipolar cable connecting the actuator and the hydraulic distributor.

Preferably, the suspension device 53 includes a further positioning sensor.

## Claims

1. A windrow merger (1) for collecting agricultural products from a field in an advancing direction (AD), comprising:
- a frame (2);
- a right pickup unit (3,3A) and a left pickup unit (3,3B), each including a pickup device (31), configured to collect the agricultural products from the field, and a conveyor (32), configured to move the agricultural products in a conveying direction (D) oriented horizontally and transversally to the advancing direction (AD);
- a right connecting device (4,4A) and a left connecting device (4,4B), for movably coupling to the frame (2) the right (3A) and the left pickup units (3B), respectively, each one of the right (4A) and left connecting devices (4B) including a kinematic mechanism (5), for interconnecting the pickup unit (3) to the frame (2), and a main actuator (6), connected to the kinematic mechanism (5) for moving the pickup unit (3) parallel to the conveying direction (D) between an inward position and an outward position,
**characterized in that** the kinematic mechanism (5) includes
a pendulum (51), pivotally connected to the frame (2) to oscillate around a first axis (A), the first axis (A) laying on a vertical plane parallel to the advancing direction (AD), and
a main arm (52), having a first end (52A) hinged to the pendulum (51) and a second end (52B) coupled to the pickup unit (3).

2. The windrow merger (1) according to claim 1, wherein the main actuator (6) is connected between the frame (2) and the pendulum (51).

3. The windrow merger (1) according to claim 1 or 2, wherein the pendulum (51) has an upper end (51U), hinged to the frame (2), and a lower end (51L), the main arm (52) being hinged to the lower end (51L) of the pendulum (51) for rotating around a second axis (B), parallel to the first axis (A).

4. The windrow merger (1) according to claim 3, wherein the kinematic mechanism (5) includes a suspension device (53), connected to the frame (2) and to the main arm (52), and configured for applying a damping action to the relative rotation between the main arm (52) and the pendulum (51).

5. The windrow merger (1) according to claim 4, wherein the suspension device (53) is further configured for rotating the main arm (52), with respect to the pendulum (51), so to move the respective pickup (3) unit between a lowered position (PS), a headland position (PFC) and a raised position (PS).

6. The windrow merger (1) according to claim 5, wherein the suspension device (53) includes a cylinder-piston unit connected to an elastic accumulator (531).

7. The windrow merger (1) according to claim 5 or 6, wherein the kinematic mechanism (5) includes
a folding arm (55), the folding arm (55) having a first end (55A), hinged to the second end (52B) of the main arm (52), to rotate around a third axis (C), transversal to the second axis (B), and a second end (55B), coupled to the pickup unit (3), and
a folding actuator (7), interconnecting the main arm (52) and the folding arm (55), for moving the folding arm (55) around the third axis (C).

8. The windrow merger (1) according to any of the claims from 5 to 7, wherein the connecting device (4) is configured to move the pickup unit (3) between an operating position (PO) and a transport position (PT), wherein
in the operating position (PO), the main arm (52) is disposed in the lowered position (PA) or in the headland position (PFC),
in the transport position (PT), the main arm (52) is disposed in the raised position (PS) and the pendulum (51) is configured to be fixed in an outward position (PE), corresponding to the outward position (PE) of the pickup unit (3).

9. The windrow merger (1) according to any of the preceding claims, wherein the main actuator (6) is configured to move the pickup unit (3) between a plurality of stable positions, and wherein the connecting device (4) includes a positioning sensor (8), configured for detecting the position of the pickup unit (3) with respect to the frame (2), and wherein the apparatus (1) includes a control unit configured for receiving from the positioning sensor (8) a position signal related to the position of the right (3A) and the left pickup unit (3B), and for sending an actuation signal to the main actuator (6) of the right connecting device (4A) and to the main actuator (6) of the left connecting device (4B), so that the right (3A) and the left pickup unit (3B) are movable independently, and wherein the positioning sensor (8) is mounted on the main actuator (6) or to the suspension device (53), and wherein the positioning sensor (8) is a linear position sensor.

10. The windrow merger (1) according to any of the preceding claims, wherein each connecting device (4) includes a plurality of tie-rods (10), configured for forming a kinematic chain for connecting the frame (2) to the respective pickup unit (3), for controlling an oscillation of the pickup unit (3).

11. The windrow merger (1) according to claim 10, wherein the kinematic mechanism (5) includes a first hinge joint, wherein the pendulum (51), the main arm (52) and a first tie-rod (11) of the plurality of tie-rods (10) are connected in order to freely rotate around the axis (B).

12. The windrow merger (1) according to any claim from 7 to 11, wherein the kinematic mechanism (5) includes a second hinge joint, wherein the main arm (52), the folding arm (55) and a second tie-rod (12) of the plurality of tie-rods (10) are connected in order to freely rotate around the third axis (C).

13. A method for forming windrows through a windrow merger (1), wherein the windrow merger (1) comprises a frame (2), a right pickup unit (3,3A) and a left pickup unit (3,3B), for collecting agricultural products from a field in an advancing direction (AD), a right connecting device (4,4A) and a left connecting device (4,4B), for movably coupling to the frame (2) the right (3A) and the left pickup unit (3B), respectively, each one of the right (4A) and left connecting devices (4B) including a kinematic mechanism (5), for interconnecting the pickup unit (3) to the frame (2), and a main actuator (6), the method comprising a step of moving at least one of the right (3A) and the left pickup unit (3B) transversally to the advancing direction (AD) between an inward position (PI) and an outward position (PE), by the respective main actuator (6) and through the respective connecting device (4).

14. The method according to claim 13, wherein the kinematic mechanism (5) comprises a pendulum (51) and a main arm (52), the pendulum (51) interconnecting the frame (2) and the main arm (52), and the main arm (52) being connected to the pickup units (3), and wherein, in the moving step, the pickup unit (3) moves transversally to the advancing direction (AD) maintaining a substantially constant height with respect to the field.

15. The method according to any of the claims from 13 to 14, further comprising:
- a lifting step, wherein the pickup units (3) move by rotation from an operating position (PO), where the pickup units (3) are suitable for collecting the agricultural products, to a transport position (PT), wherein the pickup units (3) are lifted from the field;
- a folding step, wherein the pickup units (3) move by rotation from the transport position (PT) to a folded transport position, wherein the pickup units (3) are oriented in a direction substantially parallel to the advancing direction (AD).
